# EUROPEAN PATENT APPLICATION

(11) **EP 4 481 172 A1**
(43) Date of publication of application: **25.12.2024**
(21) Application number: 24180300.6
(22) Date of filing: 05.06.2024
(51) Int. Cl.: F02C 3/22, F02C 3/30, F02C 6/10, F02C 7/224, F25J 3/04

(54) **CRYOGENIC AIR SEPARATION ENHANCED GAS TURBINE**

(30) Priority: 23.06.2023 US 202318340529
(71) Applicant: RTX Corporation, Farmington, CT 06032 (US)
(72) Inventor: TERWILLIGER, Neil J., Farmington, 06032 (US); STAUBACH, Joseph B., Farmington, 06032 (US)
(74) Representative: Dehns

(57) **Abstract**

A turbine engine assembly includes a compressor section (26, 136) where an inlet airflow is compressed, a cryogenic fuel system (46) for generating flow of cryogenic fuel, an air separation system (66, 96) where an airflow is placed in thermal communication with a portion of the flow of cryogenic fuel for generating an enhanced oxygen flow (68). In a combustor section (28), the compressed inlet airflow and a portion of the enhanced oxygen flow (68) is mixed with fuel and ignited to generate an exhaust gas flow (44) that is communicated through a core flow path (C) to a turbine section (30, 140) where expansion of the exhaust gas flow (44) is utilized to generate a mechanical power output. Water is extracted from the exhaust gas flow (44) in condenser (58) transformed into a steam flow (56) for injection into the core flow path (C) in an evaporator system (54).

## Description

### TECHNICAL FIELD

The present invention relates generally to an aircraft propulsion system that utilizes a cryogenic fuel to liquify a portion of oxygen from an airflow.

### BACKGROUND

Reduction and/or elimination of carbon emissions generated by aircraft operation is a stated goal of aircraft manufacturers and airline operators. Turbine engines compress incoming core airflow, mix the compressed airflow with fuel that is ignited in a combustor to generate an exhaust gas flow. Steam injection can provide improved engine efficiencies and power density. However, extracting power from steam reduces the amount of air needed to be a working fluid. At high steam-air ratios, power is limited by the amount of oxygen available for combustion rather than turbine temperature. Cryogenic fuels provide an available cold sink that may present opportunities for integration into various engine systems and provide a means of improving engine efficiency not present in conventional turbine engine architectures.

### SUMMARY

A turbine engine assembly according to an example of the present invention includes, among other possible things, a compressor section where an inlet airflow is compressed, a cryogenic fuel system for generating flow of cryogenic fuel, an air separation system where an airflow is placed in thermal communication with a portion of the flow of cryogenic fuel for generating an enhanced oxygen flow, a combustor section where the compressed inlet airflow and a portion of the enhanced oxygen flow is mixed with fuel and ignited to generate an exhaust gas flow that is communicated through a core flow path, a turbine section where expansion of the exhaust gas flow is utilized to generate a mechanical power output, a condenser where water is extracted from the exhaust gas flow, and an evaporator system where thermal energy from the exhaust gas flow is utilized to transform water extracted from the exhaust gas flow into a steam flow for injection into the core flow path.

In an embodiment of the above, the air separation system is configured to receive a portion of airflow from the compressor section.

In an embodiment according to any of the previous embodiments, the air separation system is configured to receive the airflow from an ambient environment at ambient temperature and pressure.

In an embodiment according to any of the previous embodiments, the air separation system generates a nitrogen enriched flow that is communicated away from the core flow path through the turbine section.

In an embodiment according to any of the previous embodiments, the nitrogen enriched flow is directed to cool a portion of the compressor section.

In an embodiment according to any of the previous embodiments, a secondary combustor is disposed downstream of at least a portion of the turbine section, wherein a portion of the enhanced oxygen flow is communicated to the secondary combustor.

In an embodiment according to any of the previous embodiments, the air separator comprises a first heat exchanger disposed outside of a core flow path, the heat exchanger configured to communicate the flow of cryogenic fuel with a flow of air.

In an embodiment according to any of the previous embodiments, a recuperation heat exchanger is included where an enhanced oxygen flow and a nitrogen enriched gas (or flow) are placed in thermal communication with the flow of air.

In an embodiment according to any of the previous embodiments, at least one recuperation turboexpander is included and is driven by an enhanced oxygen flow exhausted from the recuperation heat exchanger.

In an embodiment according to any of the previous embodiments, at least one recuperation turboexpander is driven by a gaseous flow of cryogenic fuel exhausted from the first heat exchanger.

An aircraft propulsion system according to another example of the present invention includes, among other possible things, a core engine configured to generate an exhaust gas flow, the core engine including a core flow path through a compressor section, a combustor section and a turbine section, a cryogenic fuel system configured to generate flow of cryogenic fuel, an air separation system where an airflow is placed in thermal communication with a portion of the flow cryogenic fuel for liquifying a portion of oxygen from the airflow to generate an enhanced oxygen flow. A portion of the enhanced oxygen flow is injected into the combustor section. The system further includes a condenser where water is extracted from the exhaust gas flow, an evaporator system where thermal energy from the exhaust gas flow is utilized to transform water extracted from the exhaust gas flow into a steam flow for injection into the core flow path.

In an embodiment of the above, the air separation system is configured to receive a portion of airflow from the compressor section.

In an embodiment according to any of the previous embodiments, the air separation system is configured to receive the airflow from an ambient environment at ambient temperature and pressure.

In an embodiment according to any of the previous embodiments, a secondary combustor is disposed downstream of at least a portion of the turbine section and a portion of the enhanced oxygen flow is communicated to the secondary combustor.

In an embodiment according to any of the previous embodiments, a recuperation system where at least one of an enhanced oxygen flow and a nitrogen enriched gas (or flow) are placed in thermal communication with the flow of air for precooling before communication into the air separation system.

In an embodiment according to any of the previous embodiments, the air separation system generates a nitrogen enriched flow that is communicated away from the core flow path through the turbine section.

A method of operating a gas turbine engine according to another example of the present invention includes, among other possible things, generating a flow of cryogenic fuel, separating oxygen from an airflow by liquifying oxygen through cooling with the flow cryogenic fuel to generate an enhanced oxygen flow, generating an exhaust gas flow in a combustor with a portion of the cryogenic fuel flow and the enhanced oxygen flow, expanding the gas flow through a turbine section and generating a mechanical power output, extracting water from the exhaust gas flow in a condenser, and transforming the water flow to a steam flow with heat from the exhaust gas flow in an evaporator system and injecting a portion of the steam flow into the combustor.

An embodiment of the above includes separating a nitrogen enriched gas flow from the airflow and routing the nitrogen enriched gas flow away from a core flow path.

An embodiment according to any of the previous embodiments includes injecting a portion of the enhanced oxygen flow into a secondary combustor and generating a second exhaust gas flow that is expanded through the turbine section to generate mechanical power.

An embodiment according to any of the previous embodiments includes controlling generation of the oxygen enhanced flow by adjusting a ratio of a flow of cryogenic fuel relative to the airflow communicated to an air separator.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system embodiment.
Figure 2 is a schematic cross-sectional view of another example aircraft propulsion system embodiment.
Figure 3 is a graph illustrating relative saturation points of oxygen and nitrogen.
Figure 4 is a schematic view of an example air separation system embodiment.
Figure 5 is a schematic view of another example air separation system embodiment.
Figure 6 is a schematic view of another example aircraft propulsion system embodiment.

### DETAILED DESCRIPTION

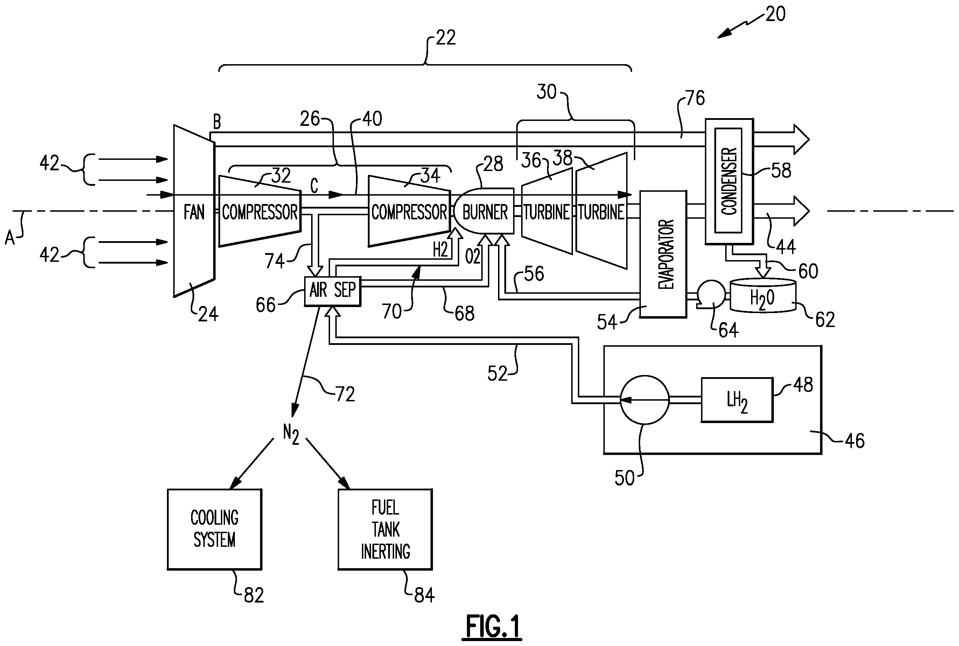

Figure 1 schematically illustrates an example propulsion system 20 that includes an air separation system 66 that utilizes cryogenic fuel to transform a portion of oxygen of an inlet airflow into liquid oxygen. The liquid oxygen is utilized to generate an oxygen enriched flow that is injected into a combustor. Separation of oxygen from the inlet airflow further provides a nitrogen enriched stream that is utilized for cooling and for fuel tank inerting. The additional quantities of oxygen provided by oxygen enriched flows increase combustion capacity.

The example propulsion system 20 includes a fan section 24 driven by a core engine 22. The core engine 22 includes a compressor section 26, a combustor section 28 and the turbine section 30 disposed along an engine longitudinal axis A. The fan section 24 drives inlet airflow 42 along a bypass flow path B, while the compressor section 26 draws air in along a core flow path C. The inlet airflow 42 is compressed and communicated to the combustor section 28 where the compressed core airflow 40 is mixed with a flow 70 and ignited to generate an exhaust gas flow 44. The exhaust gas flow 44 expands through the turbine section 30 where energy is extracted to generate a mechanical power output utilized to drive the fan section 24 and the compressor section 26. The compressor section 26 includes a low pressure compressor (LPC) 32 and a high pressure compressor (HPC) 34. The turbine section 30 includes a high pressure turbine (HPT) 36 and a low pressure turbine (LPT) 38.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engine architectures. Additionally, the features of this disclosure may be applied to other engine configurations utilized to generate shaft power.

A fuel system 46 having at least a fuel tank 48 and a fuel pump 50 provides a fuel flow 52 to the combustor 28. The example fuel system 46 is configured to provide a cryogenic fuel such as liquid hydrogen (LH₂). Although hydrogen is disclosed by way of example, other cryogenic fuels could be utilized and are within the contemplation of this disclosure.

An evaporator system 54 and condenser 58 are disposed downstream of the turbine section 30 and receive the exhaust gas flow 44. The evaporator system 54 utilizes thermal energy from the exhaust gas flow 44 to generate a steam flow 56 from water 60 extracted by the condenser 58.

The condenser 58 cools the exhaust gas flow 44 to extract water that is gathered in a tank 62 and pressurized by a pump 64. In one disclosed example embodiment, a cooling ram air flow 76 is used as the cold sink. Other cold sink flows may be utilized to cool the exhaust gas flow 44 within the condenser 58 and are within the contemplation and scope of this disclosure.

The steam flow 56 from the evaporator 54 is injected into the core flow path C at or upstream of the combustor 28 and increases mass flow through the turbine section 30 and thereby increase engine power and efficiency. The propulsion system 20 has an increased power output from the injected steam 56 due to an increasing mass flow through the turbine section 30 without a corresponding increase in work from the compressor section 26. Although the steam flow 56 is shown as being injected into the combustor 28, the steam flow 56 may be injected at other locations along the core flow path C and remain within the contemplation and scope of this disclosure.

The liquid hydrogen fuel is stored at cryogenic temperatures below about 60 °K (-213 °C). The cryogenic temperature of the fuel flow 52 is utilized as a cold sink to separate oxygen from an airflow 74 in an air separation system 66. The example air separation system 66 provides thermal communication between the fuel flow 52 and an airflow 74. In one example embodiment, the airflow 74 is drawn from a portion of the compressor section 26 and is therefore at an elevated pressure. The airflow 74 in one disclosed embodiment is drawn from a location between the LPC 32 and the HPC 34. However, the airflow 74 may be drawn from any location in the compressor section 26. Moreover, the airflow 74 may be drawn from another source such as the bypass flow passage B, inlet airflow 42 or air obtained at ambient temperatures and pressures.

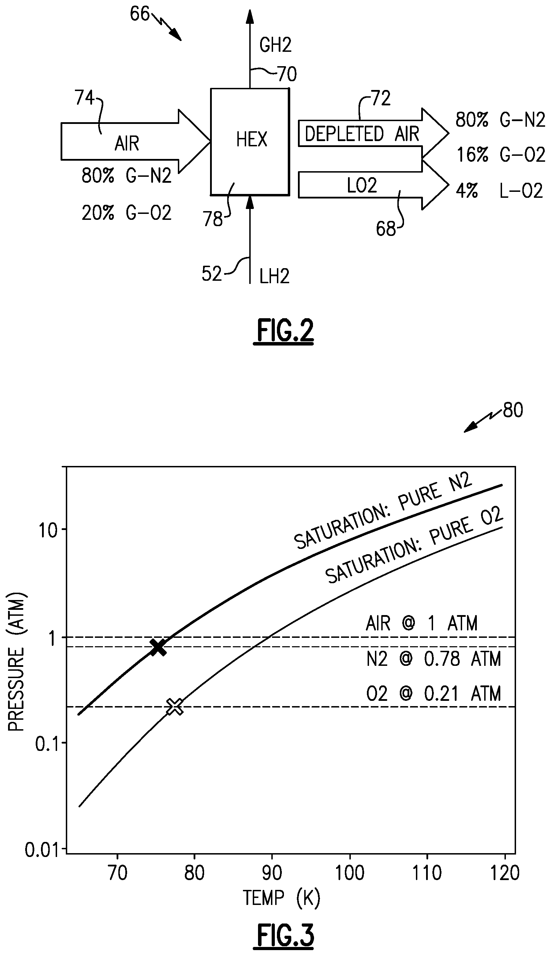

Referring to Figures 2 and 3, with continued reference to Figure 1, the inlet airflow 74 includes oxygen and nitrogen in gas form. Oxygen is transformed to a liquid at temperatures below about 80 °K (-195 °C) at pressures below about 1 atmosphere as shown in graph 80 (Figure 3). The cryogenic fuel flow 52 liquifies oxygen in the airflow 74 to enable separation from other components in the inlet airflow.

Although the separated oxygen may initially be in a liquid form, the oxygen flow will be transformed into a gas form prior to injection in the combustor. Moreover, as the separated oxygen is communicated throughout the engine, the mixture of liquid and gas forms will change depending on the specific conditions in any location.

The separated oxygen generates an enhanced oxygen flow 68 that may include both liquid oxygen and gaseous oxygen depending on relative temperatures and pressures. The oxygen enhanced flow 68 that is transformed into a gaseous flow oxygen enhanced for injection into the combustor 28 to further facilitate combustion. Fuel flow 70 exhausted from the air separation system 66 is in a gas form. The fuel flow 70 is communicated to the combustor 28 and mixed with the oxygen enhanced flow 68 to generate the exhaust gas flow 44.

In one example embodiment, the use of the oxygen enhanced flow 68 reduces a percentage of nitrogen that is communicated to the combustor. In one example, a mass flow of nitrogen entering the combustor is less than 3.7 lb./s Nitrogen for each 1 lb./s oxygen entering the combustor.

The amount of oxygen separated from the airflow may be controlled by controlling either the flow of incoming air or of the cryogenic fuel flow 52 into the separator 66. Moreover, an accumulator may be provided that stores some quantity of separated oxygen to provide a buffer to supplement operational conditions where the separation of oxygen from the airflow may not be sufficient to meet all demands. The control of the respective flows may be based on demand, the current cooling capacity of the cryogenic fuel flow or other operational conditions that affect separation. A ratio of airflow to the cryogenic fuel flow 52 may be controlled to tailor separation to operation specific demands.

The saturation temperature of oxygen is higher than that of nitrogen at the mixing ratio of air. Accordingly, a portion of the oxygen is liquified before nitrogen within the inlet airflow 74 also becomes liquified. If only a part of the air is liquefied, that liquid will be enriched in oxygen relative to the other part. Either by selective liquification or other form of separation, the air separation system 66 produces both an oxygen enriched stream 68 and a nitrogen enriched stream 72. The nitrogen enriched stream 72 is communicated to cooling systems 82 in the core engine 22 to facilitate cooling. Additionally, the nitrogen enriched stream 72 may be utilized in a fuel tank inerting system 84. In each case, the nitrogen enriched stream is communicated away from the core flow and the combustion process.

In one disclosed example, the air separation system 66 includes a heat exchanger 78 that provides for thermal communication between the fuel flow 52 and the inlet airflow 74. The heat exchanger 78, and thereby the air separation system 66, may be located at various locations relative to the core engine 22 that facilitate communication of the inlet airflow 74 and fuel flow 52. Moreover, the outgoing fuel flow 70 may be routed to other heat exchangers for cooling.

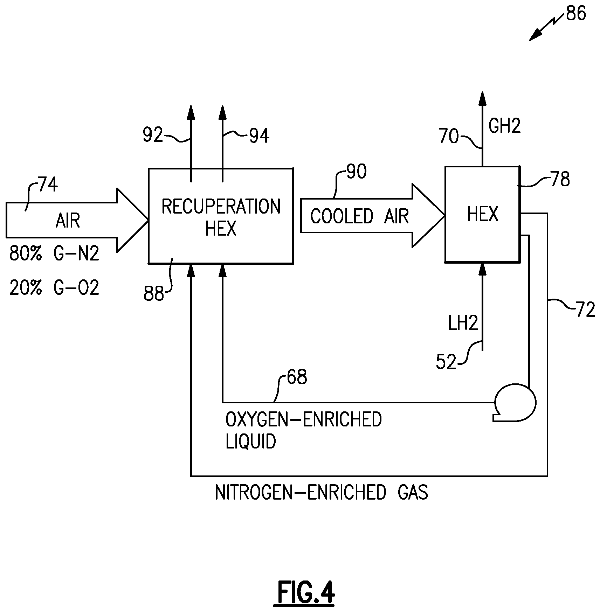

Referring to Figure 4 with continued reference to Figure 1, another air separation system 86 is schematically shown and includes a recuperation heat exchanger 88. The recuperation heat exchanger 88 precools the inlet airflow 74 prior to cooling by the fuel flow 52 in the heat exchanger 78. Additionally, heat input into the inlet airflow 74 within the compressor section 26 is recovered and used to transform the separated LOX stream 68 into a gaseous oxygen flow 94 prior to injection into the combustor 28.

In this example embodiment, a nitrogen enriched stream 72 and an oxygen enhanced stream 68 separated in the heat exchanger 78 are communicated to the recuperation heat exchanger 88 to precool the inlet airflow 74. The oxygen enhanced stream 68 is heated in the recuperation heat exchanger 88 and exhausted as the gaseous oxygen flow 94, which is communicated to the combustor 28. The nitrogen enriched stream 92 exhausted from the recuperation heat exchanger 88 is heated but is still provided at a temperature useful in the cooling system 82 and the fuel tank inerting system 84. Accordingly, the recuperation heat exchanger 88 recovers some cooling capacity from the products of air separation to increase engine the quantity of oxygen that can be separated.

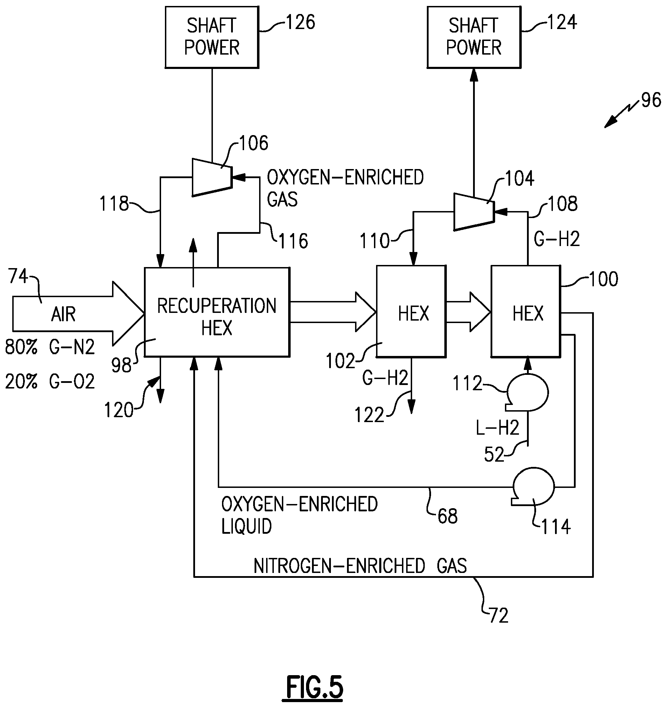

Referring to Figure 5, another example air separation system 96 is schematically shown and includes a gaseous fuel turboexpander 104 and an oxygen gas turboexpander 106. The turboexpanders 104, 106 recapture energy from heating and cooling of the liquid fuel and oxygen enhanced stream. In one example embodiment, the inlet airflow 74 is precooled in a recuperation heat exchanger 98 by the oxygen enhanced stream 68 and the nitrogen-enriched flow 72 from the first heat exchanger 100.

The liquid fuel flow 52 is pre-pressurized by a fuel pump 112 before entering the first heat exchanger 100 and exhausted after accepting heat from the inlet airflow 74 as a gaseous fuel flow 108. The gaseous fuel flow 108 is expanded through the fuel turboexpander 104 and exhausted as a cooled gaseous fuel flow 110. The fuel turboexpander 104 generates shaft power 124 that may be utilized to drive accessory devices such as for example, a pump, an electric motor and a hydraulic actuator. The cooled gaseous fuel flow 110 is communicated through a second heat exchanger to further pre-cool the inlet airflow 74. The exhausted gas flow 122 is communicated to the combustor 28 for combustion and generation of the exhaust gas flow 44.

The oxygen enhanced flow 68 from the first heat exchanger 100 is pressurized in an oxygen pump 114 and communicated to the recuperation heat exchanger 98. The oxygen enhanced flow 68 accepts heat from the inlet airflow 74 in the recuperation heat exchanger 98 and is exhausted as an oxygen-enriched gas flow 116. The oxygen-enriched gas flow 116 is expanded through the oxygen turboexpander 106 to recover heat energy and generates a cooled oxygen-enriched gas flow 118. The turboexpander 106 generates shaft power 126 that may be utilized to drive accessory components and devices.

In this example embodiment, the cooled oxygen-enriched gas flow 118 is reheated in the recuperation heat exchanger 98 to generate a heated oxygen-enriched flow 102. The heated oxygen-enriched flow 102 is communicated to the combustor 28 to facilitate combustion. The fuel flow 122 and the oxygen flow 120 may be communicated through additional heat exchangers and turboexpanders before injection into the combustor 28 to extract and recover any additional energy and/or cool other engine systems. While this embodiment shows several heat exchangers in series arrangement, alternate embodiments with the heat exchangers cooling portions of the inlet airflow 74 in parallel also remain within the contemplation and scope of this disclosure.

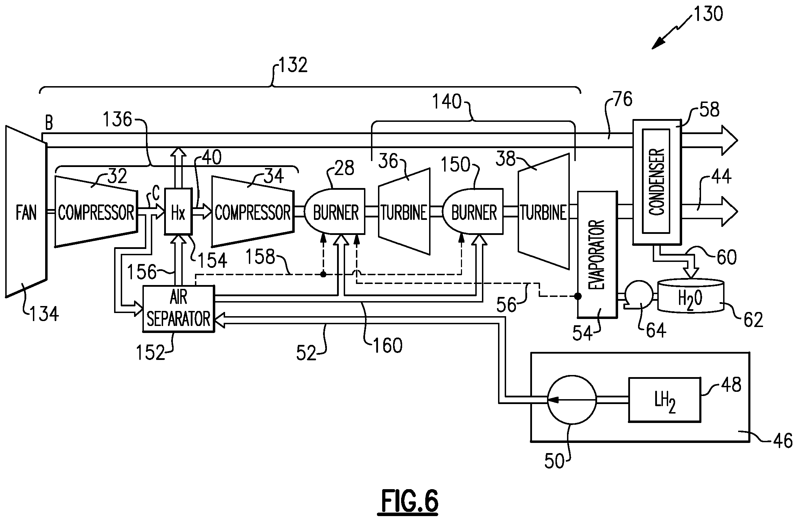

Referring to Figure 6, another example propulsion system 130 is schematically shown and includes a core engine 132 having a secondary combustor 150 where an oxygen enriched flow 158 is injected to support combustion. The example turbine engine 130 includes a compressor section 136, combustor 28 and a turbine section 140. The compressor section 136 includes an LPC 32, an HPC 34 and an intercooling system 154. The turbine section 140 includes an HPT 36, LPT 38 and the secondary combustor 150. The evaporator 54 and condenser 58 operate as previously described to generate a steam flow 56 injected into the combustor 28. In the described embodiment, steam flow 56 is communicated to the combustor 28. However, it is within the contemplation of this disclosure to additionally inject steam flow 56 into the secondary combustor 150.

The air separator system 152 may be configured according to any previously described embodiment and separates the inlet airflow 74 into an oxygen enhanced stream 158 and a nitrogen-enriched stream 156. The liquid fuel flow 52 provides the cold sink that cools the inlet airflow 74 to temperatures needed to liquify the oxygen and generate the oxygen enhanced stream 158.

The combustor 28 may operate at near stoichiometric conditions and therefore leave insufficient oxidant in the exhaust gas flow 44 to facilitate combustion in the secondary combustor 150. A portion of the oxygen enhanced stream 158 is therefore communicated to the secondary combustor 150 to support combustion. The fuel flow 160 exhausted from the air separator 152 is in a gaseous form and is communicated to both combustors 28, 150 for combustion.

The example core engine 132 includes the intercooling system 154 that utilizes the nitrogen-enriched stream 156 to cool core airflow in the compressor section 136. In this disclosed example, the intercooling system 154 cools the core airflow between the LPC 32 and the HPC 34. However, the intercooling system 154 may provide air cooling at other locations within the compressor section 136 and remain within the contemplation and scope of this disclosure.

The nitrogen-enriched flow 156 is exhausted into the ambient environment from the intercooling system 154. The nitrogen-enriched flow 156 may be communicated to provide cooling or fuel tank inerting.

Accordingly, the example propulsion systems utilized cryogenic fuel to generate an oxygen-enriched flow that increases the amount of available oxygen to support combustion.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A turbine engine assembly comprising:
a compressor section (26, 136) where an inlet airflow (42) is compressed;
a cryogenic fuel system (46) for generating flow of cryogenic fuel (52);
an air separation system (66, 96) where an airflow (74) is placed in thermal communication with a portion of the flow of cryogenic fuel (52) for generating an enhanced oxygen flow (68);
a combustor section (28) where the compressed inlet airflow (74) and a portion of the enhanced oxygen flow (68) is mixed with fuel and ignited to generate an exhaust gas flow (44) that is communicated through a core flow path (C);
a turbine section (30, 140) where expansion of the exhaust gas flow (44) is utilized to generate a mechanical power output;
a condenser (58) where water is extracted from the exhaust gas flow (44); and
an evaporator system (54) where thermal energy from the exhaust gas flow (44) is utilized to transform water extracted from the exhaust gas flow (44) into a steam flow (56) for injection into the core flow path (C).

2. The turbine engine assembly as recited in claim 1, wherein the air separation system (66, 96) generates a nitrogen enriched flow (156, 72, 92) that is communicated away from the core flow path (C) through the turbine section (30, 140), optionally wherein the nitrogen enriched flow (156, 72, 92) is directed to cool a portion of the compressor section (26, 136).

3. The turbine engine assembly as recited in claim 1 or 2, wherein the air separation system (66, 96) comprises a first heat exchanger (100) disposed outside of a or the core flow path (C), the first heat exchanger (100) configured to communicate the flow of cryogenic fuel (52) with a flow of air (74).

4. The turbine engine assembly as recited in any preceding claim, further including a recuperation heat exchanger (98) where an enhanced oxygen flow (68) and a nitrogen enriched gas (72) are placed in thermal communication with a or the flow of air (74).

5. The turbine engine assembly as recited in claim 4, further comprising at least one recuperation turboexpander (106) driven by an enhanced oxygen flow (116) exhausted from the recuperation heat exchanger (98).

6. The turbine engine assembly as recited in claim 4 or 5, further comprising at least one recuperation turboexpander (104) driven by a gaseous flow of cryogenic fuel (108) exhausted from the first heat exchanger (100).

7. An aircraft propulsion system comprising:
a core engine (22, 132) configured to generate an exhaust gas flow (44), the core engine (22, 132) including a core flow path (C) through a compressor section (26, 136), a combustor section (28) and a turbine section (30, 140);
a cryogenic fuel system (46) configured to generate flow of cryogenic fuel (52);
an air separation system (66, 96) where an airflow (74) is placed in thermal communication with a portion of the flow of cryogenic fuel (52) for liquifying a portion of oxygen from the airflow (74) to generate an enhanced oxygen flow (68), wherein a portion of the enhanced oxygen flow (68) is injected into the combustor section (28);
a condenser (58) where water is extracted from the exhaust gas flow (44); and
an evaporator system (54) where thermal energy from the exhaust gas flow (44) is utilized to transform water extracted from the exhaust gas flow (44) into a steam flow (56) for injection into the core flow path (C).

8. The turbine engine assembly or aircraft propulsion system of any preceding claim, wherein the air separation system (66, 96) is configured to receive a portion of airflow (74) from the compressor section (26, 136).

9. The turbine engine assembly or aircraft propulsion system as recited in any preceding claim, wherein the air separation system (66, 96) is configured to receive the airflow (74) from an ambient environment at ambient temperature and pressure.

10. The turbine engine assembly or aircraft propulsion system as recited in any preceding claim, further including a secondary combustor (150) disposed downstream of at least a portion of the turbine section (30, 140), wherein a portion of the enhanced oxygen flow (160) is communicated to the secondary combustor (150).

11. The aircraft propulsion system as recited in any of claims 7 to 10, wherein:
the aircraft propulsion system further includes a recuperation system where at least one of an or the enhanced oxygen flow (68) and an or the nitrogen enriched gas (72, 92) are placed in thermal communication with a or the flow of air (74) for precooling before communication into the air separation system (66, 96); and/or
the air separation system (66, 96) generates a or the nitrogen enriched flow (72, 92) that is communicated away from the core flow path (C) through the turbine section (30, 140).

12. A method of operating a gas turbine engine, the method comprising:
generating a flow of cryogenic fuel (52);
separating oxygen from an airflow (74) by liquifying oxygen through cooling with the flow cryogenic fuel (52) to generate an enhanced oxygen flow (68);
generating an exhaust gas flow (44) in a combustor (28) with a portion of the cryogenic fuel flow (52) and the enhanced oxygen flow (68);
expanding the exhaust gas flow (44) through a turbine section (30, 140) and generating a mechanical power output;
extracting water (60) from the exhaust gas flow (44) in a condenser (58); and
transforming the water flow (60) to a steam flow (56) with heat from the exhaust gas flow (44) in an evaporator system (54) and injecting a portion of the steam flow (56) into the combustor (28).

13. The method as recited in claim 12, further comprising separating a nitrogen enriched gas flow (72, 92) from the airflow (74) and routing the nitrogen enriched gas flow (72, 92) away from a core flow path (C).

14. The method as recited in claim 12 or 13, further comprising injecting a portion of the enhanced oxygen flow (68) into a secondary combustor (150) and generating a second exhaust gas flow (44) that is expanded through the turbine section (30, 140) to generate mechanical power.

15. The method as recited in any of claims 12 to 14, further comprising controlling generation of the enhanced oxygen flow (68) by adjusting a ratio of a flow of cryogenic fuel (52) relative to the airflow (74) communicated to an air separator (152).
